# EUROPEAN PATENT SPECIFICATION

(11) **EP 2 533 674 B1**
(45) Date of publication and mention of the grant of the patent: **02.07.2014**
(21) Application number: 11707483.1
(22) Date of filing: 08.02.2011
(51) Int. Cl.: A47J 31/44

(54) **DEVICE FOR HEATING AND FROTHING A LIQUID**
VORRICHTUNG ZUM ERWÄRMEN UND AUFSCHÄUMEN EINER FLÜSSIGKEIT
DISPOSITIF POUR LE CHAUFFAGE ET LE MOUSSAGE D'UN LIQUIDE

(30) Priority: 11.02.2010 EP 10153273
(43) Date of publication of application: 19.12.2012
(73) Proprietor: Koninklijke Philips N.V., 5656 AE Eindhoven (NL)
(72) Inventor: DOUMA, Sipke, Theo, 5656 AE Eindhoven (NL)
(74) Representative: Coops, Peter
(86) International application number: PCT/IB2011/050523
(87) International publication number: WO 2011/098949

(56) References cited:
- DE-A1- 4 445 436
- US-A1- 2003 106 433
- US-A1- 2005 233 043
- US-A1- 2007 240 582

## Description

### FIELD OF THE INVENTION

The present invention relates to a device for heating and frothing a liquid, comprising means for generating steam which is to be used for heating the liquid, wherein the steam generating means comprise a heated space having an inlet of water which is to be transformed to steam, and further comprising an intake of air which is to be used for frothing the liquid.

Furthermore, the present invention relates to an assembly of a device for preparing a beverage, comprising a closeable and openable space for receiving and containing a quantity of beverage extract, means for supplying a liquid to the space, and means for transporting a beverage from the space to an outlet of the device, and a device for heating and frothing a liquid as mentioned.

### BACKGROUND OF THE INVENTION

A device for heating and frothing a liquid is well-known. A practical example of a liquid to be heated and frothed is milk. In many cases, hot milk froth is used in the field of preparing coffee beverages such as latte macchiato and cappuccino.

In general, it is known to use a so-called steam pipe for the purpose of creating froth in a quantity of milk, and heating the milk in the process, which is operated manually. A disadvantage of the use of a steam pipe is that skills are required to trap just the right quantity of air in the milk. One way to trap air in the milk is to hold a tip of the steam pipe just under the surface of the milk, which is not very easy to do.

In order to dispense with the difficulties associated with the use of a steam pipe, methods and devices have been developed for automatically performing the function of frothing and heating milk. In particular, a separate supply of air is realized, besides the supply of steam.

EP 1 776 905 discloses a method for heating and whipping milk, and a device for carrying out the method, in particular for preparing cappuccino in coffee machines. In the known device, the heating and whipping of the milk are carried out by the combined action of a flow of vapor, which is dispensed by a boiler which produces water vapor, and a flow of compressed air, which is dispensed by an associated compressor. The vapor and the air are transported to a jug containing milk by means of pipes. Both the pipe for transporting vapor and the pipe for transporting air are connected to a directing pipe, which has an open end, and which is used for directing a jet of vapor and compressed air through its open end, from the two pipes as mentioned, into the jug.

A disadvantage of the device known from EP 1 776 905 is that a rather extensive system of pipes is needed. Furthermore, it is necessary for a user to take care that the jug with frothed milk is removed immediately from the device when the milk is ready. If the user allows the jug to remain in place after the steaming has ended, there is a chance that a phenomenon known as reflux occurs, which means that milk is suctioned from the jug into the boiler under the influence of underpressure prevailing in the boiler.

EP 2 070 455 discloses another type of milk frothing device. Among other things, the device comprises a heating/frothing unit and supply lines for supplying milk, air and steam to the unit. During operation of the device, an actual supply of the milk, the air and the steam to the heating/frothing unit takes place, wherein these fluids get mixed inside the unit, so that hot, frothed milk is obtained. In the air supply line, an air pump is arranged, on the basis of which it is possible to have accurate control of features of the air supply.

A disadvantage of the device known from EP 2 070 455 is that there is a chance of reflux, as is the case with the method known from EP 1 776 905. Another disadvantage is that both the air supply line and the steam supply line need to be detachable from the heating/frothing unit, in view of cleaning purposes. To that end, two connectors need to be present in the device. Another device for foaming milk is known from US 2007/0240582.

### SUMMARY OF THE INVENTION

It is an object of the present invention to provide a new type of device for heating and frothing a liquid such as milk, which is easy to operate, and which does not have the disadvantages as mentioned in the foregoing in respect of known devices. This object is achieved by a device comprising steam generating means and an air intake as mentioned earlier, wherein the air intake is arranged in the heated space of the steam generating means, and wherein means are provided for pumping air into the heated space of the steam generating means, through the air intake.

When the present invention is applied, air is supplied directly to the heated space of the steam generating means, through the air intake which provides access to the space as mentioned, as a result of which it is achieved that a mixture of steam and air exits the steam generating means. In the context of a steam pipe, this means that the use of a steam pipe no longer requires special frothing skills, as the mixture of steam and air is simply pumped into the liquid to be frothed, wherein there is no need for specific handling of the steam pipe. In the context of a device for automatically performing a liquid frothing process, this means that there is no need for a pipe for transporting air from the air intake to the liquid. On the basis of this fact, the system of pipes can be less complicated. Also, in a device comprising a unit in which liquid, steam and air are mixed, such as the device known from EP 2 070 455, there is no longer a need for two connectors, as there is no longer a separate air supply line. Instead, the supplies of the air and the steam are combined in a single supply line. Furthermore, it is very well possible to avoid reflux, especially because means are used for supplying the air to the heated space of the steam generating means by performing a pumping action. The fact is that the pumping means may be activated for a predetermined period of time after the steaming has ended, so that underpressure in the steam generator is prevented.

Preferably, the means for pumping the air directly into the heated space of the steam generator comprise an electrical pump. Such a type of pump allows for accurate control of the air supply.

The device according to the invention may further comprise means for controlling the operation of the pumping means, and a user interface which is connected to the controlling means. When such controlling means and a user interface are present, the operation of the pumping means can be controlled in dependence on input provided by a user. For example, the user may be given a choice of heating and frothing a liquid, or only heating a liquid. In this way, nice recipes can be made with just one push of a button.

When controlling means as mentioned are present in the device, these means may be adapted to realize an activated state of the pumping means for a predetermined period of time after deactivation of the steam generating means in an operation cycle of the device. As has been mentioned in the foregoing, it is possible to avoid reflux in that way.

In a practical embodiment of the device according to the present invention, the air intake is located at an inlet side of the steam generating means, i.e. a side where the inlet of water which is to be transformed to steam is present. When the air would be pumped into the steam generator from another side, there is a risk that the process of steam formation and steam emission is counteracted.

The steam generating means may comprise a thermo block as known in the art, apart from the air intake, i.e. a heatable block through which at least one conduit for transporting water is extending. In such case, the interior of the conduit serves as the heated space where the transformation process of water to steam takes place during operation.

When the present invention is applied, it is practical to have a single line in the device which extends from the steam generating means to a unit in which liquid, steam and air are mixed during operation of the device, wherein the single line serves for transporting both steam and air. The unit as mentioned may be designed such as to function according to the so-called venturi principle. In that case, the unit comprises an expansion space, whereas the line for transporting both steam and air ends directly in the expansion space, via a steam restriction. Due to the converging-diverging effect of the successive arrangement of the steam restriction and the expansion space, pressure energy of the steam is converted to velocity energy, so that a low pressure zone is created inside the unit. On the basis of this phenomenon, liquid can be drawn into the unit. Using the venturi effect and pumping the liquid by means of the steam is a very advantageous option, due the fact that there is no need for a separate pump for pumping the liquid, which saves costs and adds to simplicity of design. For sake of completeness, it is noted that when this option is realized, the steam does not only have a function in heating the liquid, but also in pumping the liquid.

The above-described and other aspects of the present invention will be apparent from and elucidated with reference to the following detailed description of a device comprising a thermo block and an air pump, wherein the pump is arranged such as to pump air directly into the thermo block.

### BRIEF DESCRIPTION OF THE DRAWINGS

The present invention will now be explained in greater detail with reference to the figures, in which equal or similar parts are indicated by the same reference signs, and in which:
figure 1 diagrammatically shows a number of components of a device for heating and frothing milk, as known from EP 2 070 455, and illustrates the configuration of these components; and
figure 2 diagrammatically shows a number of components of a device for heating and frothing milk, according to the present invention, and illustrates the configuration of these components.

### DETAILED DESCRIPTION OF EMBODIMENTS

The present invention will be explained in the context of a device for heating and frothing milk. It is emphasized that this does not mean that the present invention is limited to this context, as the present invention also relates to devices which are suitable for heating and frothing another type of liquid. First, an explanation of a device according to the state of the art will be given, namely a device known from EP 2 070 455, and second, the features of the present invention will be elucidated.

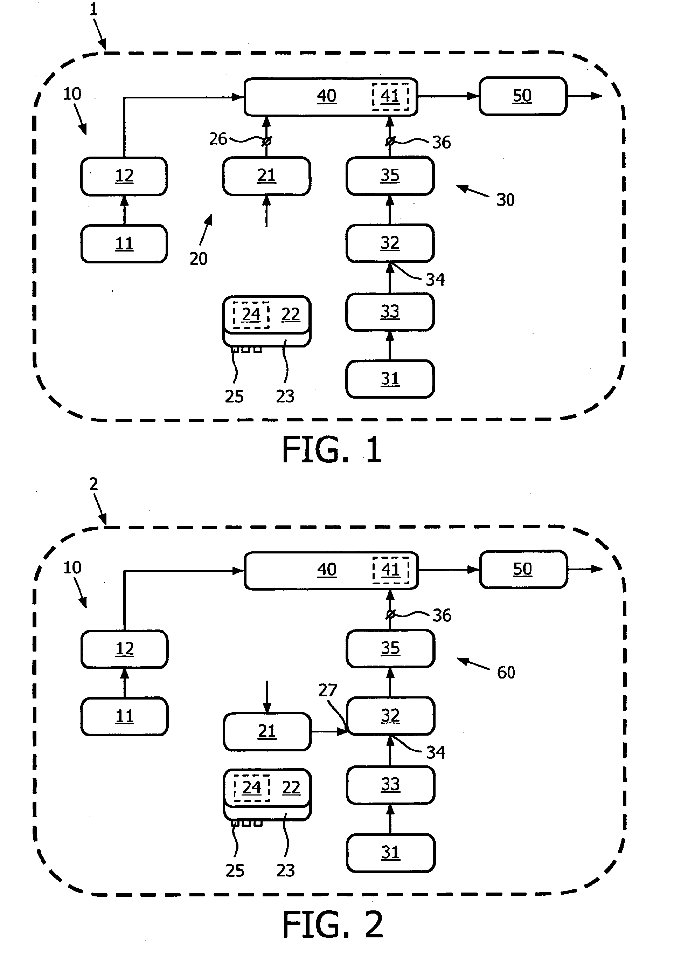

Figure 1 diagrammatically shows a number of components of the known device 1 for heating and frothing milk, as mentioned. The device 1 comprises a supply line 10 for supplying the milk and a supply line 20 for supplying the air to be used in the process of frothing the milk. Furthermore, the device 1 comprises a supply line 30 for supplying steam, wherein all three supply lines 10, 20, 30 join onto a heating/frothing unit 40. One of the functions of the steam supply is heating the frothed milk, so that the device 1 is capable of letting out milk at a temperature which is convenient in view of applications of the milk in a context of hot beverages such as coffee.

The device 1 comprises a milk reservoir 11 for containing the milk to be frothed in the heating/frothing unit 40. The milk reservoir 11 is connected to the heating/frothing unit 40 through a restriction 12.

In the air supply line 20, an air pump 21 is arranged. The flow of air which is supplied to the heating/frothing unit 40 during a frothing operation of the device 1 may be accurately controlled by controlling the operation of the air pump 21. In particular, the air pump 21 may be an electrically powered pump, and a combination of a microcontroller 22 and a user interface 23 may be provided for controlling the electric power which is supplied to the pump 21. Various froth qualities may simply be set by a user of the device 1, as the features of processes for obtaining these particular froth qualities, especially the features of the operation of the air pump 21, may be predetermined and stored in a memory 24 of the microcontroller 22, wherein the user interface 23 comprises buttons 25 or the like for addressing one of the predetermined options.

For the purpose of generating steam, the device 1 comprises a water reservoir 31 for containing water and a thermo block 32 for heating water to steam, wherein a pump 33 is provided for pumping the water from the water reservoir 31 to the thermo block 32, through an inlet 34 which is arranged in the thermo block 32. Like the milk supply line 10, the steam supply line 30 is connected to the heating/frothing unit 40 through a restriction 35.

In figure 1, a direction of flows of the fluids milk, air, water, steam and frothed milk is indicated by means of arrows. A chamber for letting out the frothed and heated milk is indicated by the reference numeral 50. Naturally, this chamber 50 is located downstream of the heating/frothing unit 40, at an outlet side of the device 1.

Operation of the device 1 involves activation of the pump 33 for displacing water from the water reservoir 31 to the thermo block 32. The thermo block 32 is activated as well, and the water is heated to such an extent that steam is generated. The steam enters the heating/frothing unit 40 through the steam restriction 35.

The heating/frothing unit 40 is designed such as to function according to the so-called venturi principle. Consequently, the heating/frothing unit 40 comprises an expansion space 41. The steam supply line 30 ends directly in the expansion space 41, and due to the converging-diverging effect of the successive arrangement of the steam restriction 35 and the expansion space 41, pressure energy of the steam is converted to velocity energy, so that a low pressure zone is created inside the heating/frothing unit 40. On the basis of this phenomenon, milk is drawn into the heating/frothing unit 40, through the restriction 12, and gets entrained by the steam. Air is supplied to the heating/frothing unit 40 as well on the basis of activation of the air pump 21. The milk, air and steam get mixed inside the heating/frothing unit 40, wherein the interaction with the air causes the milk to froth, and wherein the interaction with the steam causes the milk to heat up. On the way to the outlet side of the device 1, the obtained mixture is recompressed under the influence of a conversion of velocity energy back into pressure energy.

Summarizing, during operation of the device 1, air is pumped into the heating/frothing unit 40, and the milk is sucked into the heating/frothing unit 40 under the influence of a supply of steam, wherein the steam is used for both pumping purposes and heating purposes. As a result, hot, frothed milk is obtained, which is conveyed to the outlet chamber 50 for further use. Features of the flows of the milk, the air and the steam are determined by various factors, including a size of the restrictions 12, 35 in the supply lines 10, 30 for supplying milk and steam, and particulars of the operation of the air pump 21. An amount and a bubble-size of the obtained froth are mainly determined by the amount of the air which is pumped into the heating/frothing unit 40.

In a practical embodiment of the device 1 known from EP 2 070 455, in view of cleaning purposes, both the air supply line 20 and the steam supply line 30 are detachable from the heating/frothing unit 40. Therefore, the device 1 is equipped with connectors 26, 36, wherein one connector 26 is positioned between the heating/frothing unit 40 and the air supply line 20, and wherein another connector 36 is positioned between the heating/frothing unit 40 and the steam supply line 30.

Figure 2 illustrates a device 2 according to the present invention, which resembles the known device 1 to a large extent, except for the positioning of the air pump 21. In the device 2 according to the present invention, the air pump 21 is positioned such as to pump air directly into the thermo block 32, through an air intake 27 which is arranged in the thermo block 32. As a consequence, one of the connectors 26, 36 which are present in the known device 1 is omitted. In particular, there is no need for an air connection to the heating/frothing unit 40, as a steam connection is present already.

Pumping air directly into the thermo block 32, i.e. the part of the device 2 where steam is generated by heating water, has another advantage besides the fact that the number of connectors 26, 36 is reduced to one, namely prevention of a flow of milk into the steam supply line 30. At the end of a steaming process, underpressure is prevailing inside the thermo block 32, which can cause the flow of milk as mentioned to occur. However, in the context of the present invention, the direct connection between the air pump 21 and the thermo block 32 can be used to prevent the flow of milk as mentioned. The fact is that the microcontroller 22 can be programmed such as to have the air pump 21 in an activated state right after the thermo block 32 has been deactivated. As a result of an inflow of air, underpressure cannot occur.

In the known device 1, the air pump 21 is used to prevent a flow of milk into the supply line 20 for supplying air to the heating/frothing unit 40. However, there are no precautionary measures as far as the steam supply line 30 is concerned. In the device 2 according to the present invention, there is a combined supply line 60 for supplying the air and the steam, and this line can be kept free from milk by means of the air pump 21. There is no supply line other than the milk supply line 10 which can be contaminated.

Although the device 2 according to the present invention is a device for heating and frothing a liquid, it is possible to use the device 2 only for heating a liquid, for example. The user interface 23 may be designed such as to offer the user a choice between obtaining a beverage with froth or a beverage without froth. In the first case, the air pump 21 is operated during the steaming process, whereas in the second case, the air pump 21 is not.

It is noted that the device 2 according to the present invention may be used as a separate, stand-alone device, but may also be part of a device for making a beverage on the basis of ingredients such as beverage extract and water. An example of a beverage maker of which the device 2 according to the present invention may be part is a coffee maker, particularly a coffee maker which is suitable to be used for making cappuccino, latte macchiato, or any other type of coffee containing milk. In any case, as beverage makers are well-known, there is no further explanation of the way in which a device 2 according to the present invention is used in combination therewith.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

For sake of completeness, it is noted that the steam generating means may be of the flow through type, as is the case with the thermo block 32 as described in the foregoing. That does not alter the fact that the steam generating means may also comprise a boiler or the like, in which the water is heated while being in a still condition.

The present invention can be summarized as follows. A device 2 for heating and frothing a liquid such as milk comprises means 32 for generating steam which is to be used for heating the liquid, and an intake 27 of air which is to be used for frothing the liquid. Other than in conventional devices 1, the air intake 27 is arranged in the steam generating means 32, so that it is possible to supply air directly into the steam generating means 32, namely through the air intake 27, and to realize a combined flow of steam and air, which is very well suitable to be used in the heating and frothing processes to be performed. As a consequence, a heating/frothing unit 40 which is part of the device 2 only needs to have one connection to a supply line 60 besides a connection to a supply line 10 for supplying the liquid. Furthermore, an undesired flow of milk into the steam generating means 32 can be prevented at all times, as the pressure prevailing inside the steam generating means 32 can be kept at a proper level by means of a direct inflow of air.

## Claims

1. Device (2) for heating and frothing a liquid, comprising
- means (32) for generating steam which is to be used for heating the liquid, wherein the steam generating means (32) comprise a heated space having an inlet (34) of water which is to be transformed to steam,
- an intake (27) of air which is to be used for frothing the liquid, **characterised in that** the air intake (27) is arranged in the heated space of the steam generating means (32), and
- means (21) for pumping air into the heated space of the steam generating means (32), through the air intake (27).

2. Device (2) according to claim 1, wherein the pumping means (21) comprise an electrical pump.

3. Device (2) according to claim 1, further comprising means (22) for controlling the operation of the pumping means (21), and a user interface (23) which is connected to the controlling means (22).

4. Device (2) according to claim 1, further comprising means (22) for controlling the operation of the pumping means (21), wherein the controlling means (22) are adapted to realize an activated state of the pumping means (21) for a predetermined period of time after deactivation of the steam generating means (32) in an operation cycle of the device (2).

5. Device (2) according to claim 1, wherein the air intake (27) is located at an inlet side of the steam generating means (32), i.e. a side where the inlet (34) of water which is to be transformed to steam is present.

6. Device (2) according to claim 1, wherein the steam generating means (32) comprise a thermo block, i.e. a heatable block through which at least one conduit for transporting water is extending.

7. Device (2) according to claim 1, comprising a single line (60) extending from the steam generating means (32) to a unit (40) in which liquid, steam and air are mixed during operation of the device (2), wherein the single line (60) serves for transporting both steam and air.

8. Device (2) according to claim 7, wherein the unit (40) is designed such as to function according to the venturi principle and comprises an expansion space (41), and wherein the line (60) for transporting both steam and air ends directly in the expansion space (41), via a steam restriction (35).

9. Assembly of a device for preparing a beverage, comprising a closeable and openable space for receiving and containing a quantity of beverage extract, means for supplying a liquid to the space, and means for transporting a beverage from the space to an outlet of the device, and a device (2) for heating and frothing a liquid according to claim 1.

## Patentansprüche

1. Vorrichtung (2) zum Erwärmen und Aufschäumen einer Flüssigkeit, wobei diese Vorrichtung Folgendes umfasst:
- Mittel (32) zum Erzeugen von Dampf, die zum Erwärmen der Flüssigkeit verwendet werden soll, wobei das Dampferzeugungsmittel (32) einen erwärmten Raum mit einer Zufuhr (34) für Wasser, das in Dampf umgesetzt werden soll,
- einen Eingang (27) für Luft, die zum Aufschäumen der Flüssigkeit verwendet werden soll, **dadurch gekennzeichnet, dass** der Lufteingang (27) in dem erwärmten Raum des Dampferzeugungsmittels (32) vorgesehen ist, und
- Mittel (21) zum Einpumpen von Luft in den erwärmten Raum des Dampferzeugungsmittels (32), durch den Lufteingang (27) hindurch.

2. Vorrichtung (2) nach Anspruch 1, wobei das Pumpmittel (21) eine elektrische Pumpe enthält.

3. Vorrichtung (2) nach Anspruch 1, die weiterhin Mittel (22) zur Steuerung des Betriebs des Pumpmittels (21), und eine Benutzerschnittstelle (23) umfasst, die mit dem Steuermittel (22) verbunden ist.

4. Vorrichtung (2) nach Anspruch 1, die weiterhin Mittel (22) zur Steuerung des Betriebs des Pumpmittels (21) aufweist, wobei die Steuermittel (22) dazu vorgesehen sind, einen aktivierten Zustand des Pumpmittels (21) zu verwirklichen, und zwar während einer vorbestimmten Zeitperiode nach Deaktivierung des Dampferzeugungsmittels (32) in einem Betriebszyklus der Vorrichtung (2).

5. Vorrichtung (2) nach Anspruch 1, wobei der Lufteingang (27) an einer Eingangsseite des Dampferzeugungsmittels (32) vorgesehen ist, d.h. an einer Seite, wo die Zufuhr von Wasser, das in Dampf umgesetzt werden soll, sich befindet.

6. Vorrichtung (2) nach Anspruch 1, wobei das Dampferzeugungsmittel (32) einen Thermoblock, d.h. einen erhitzbaren Block, durch den sich wenigstens eine Leitung zum Transportieren von Wasser erstreckt, vorgesehen ist.

7. Vorrichtung (2) nach Anspruch 1, mit einer einzigen Leitung (60), die sich von dem Dampferzeugungsmittel (32) zu einer Einheit (40) erstreckt, worin Flüssigkeit, Dampf und Luft im Betrieb der Vorrichtung (2) miteinander vermischt werden, wobei diese Leitung (60) dem Transport von Dampf sowie Luft dient.

8. Vorrichtung (2) nach Anspruch 7, wobei die Einheit (40) derart entworfen ist, dass sie entsprechend dem Venturi-Prinzip funktioniert und einen Expansionsraum (41) aufweist, und wobei die Leitung (60) zum Transportieren von Dampf und Luft mittels einer Dampfverengung (35) unmittelbar in dem Expansionsraum (41) endet.

9. Gebilde aus einer Vorrichtung zum Zubereiten eines Getränks, mit einem abschließbaren und öffnungsfähigen Raum zum Empfangen und Enthalten einer Menge Getränkeextrakt, mit Mitteln zum Zuführen einer Flüssigkeit zu einem Raum, mit Mitteln zum Transportieren eines Getränks von dem Raum zu einem Ausgang der Vorrichtung, und mit einer Vorrichtung (2) zum Erwärmen und Aufschäumen einer Flüssigkeit nach Anspruch 1.

## Revendications

1. Dispositif (2) qui est destiné à chauffer et à faire mousser un liquide, comprenant :
- des moyens (32) pour générer de la vapeur qui doit être utilisée pour chauffer le liquide, dans lequel les moyens de génération de vapeur (32) comprennent un espace chauffé ayant une entrée (34) d'eau qui doit être transformée en vapeur ;
- un dispositif d'admission d'air (27) qui doit être utilisé pour faire mousser le liquide, **caractérisé en ce que** le dispositif d'admission d'air (27) est agencé dans l'espace chauffé des moyens de génération de vapeur (32) ; et
- des moyens (21) pour pomper de l'air dans l'espace chauffé des moyens de génération de vapeur (32) par le biais du dispositif d'admission d'air (27).

2. Dispositif (2) selon la revendication 1, dans lequel des moyens de pompage (21) comprennent une pompe électrique.

3. Dispositif (2) selon la revendication 1, comprenant en outre des moyens (22) pour commander le fonctionnement des moyens de pompage (21) et une interface utilisateur (23) qui est connectée aux moyens de commande (22).

4. Dispositif (2) selon la revendication 1, comprenant en outre des moyens (22) pour commander le fonctionnement des moyens de pompage (21), dans lequel les moyens de commande (22) sont adaptés de manière à réaliser un état activé des moyens de pompage (21) pendant une période de temps prédéterminée après la désactivation des moyens de génération de vapeur (32) dans un cycle de fonctionnement du dispositif (2).

5. Dispositif (2) selon la revendication 1, dans lequel le dispositif d'admission d'air (27) se situe d'un côté d'entrée des moyens de génération de vapeur (32), c'est-à-dire un côté où se situe l'entrée (34) d'eau qui doit être transformée en vapeur.

6. Dispositif (2) selon la revendication 1, dans lequel les moyens de génération de vapeur (32) comprennent un bloc thermique, c'est-à-dire un bloc chauffant à travers lequel au moins un conduit pour transporter de l'eau s'étend.

7. Dispositif (2) selon la revendication 1, comprenant une seule ligne (60) qui s'étend à partir des moyens de génération de vapeur (32) vers une unité (40) dans laquelle du liquide, de la vapeur et de l'air sont mélangés lors du fonctionnement du dispositif (2), dans lequel la ligne unique (60) sert à transporter de la vapeur aussi bien que de l'air.

8. Dispositif (2) selon la revendication 7, dans lequel l'unité (40) est conçue de manière à fonctionner selon le principe de venturi et comprend un espace d'expansion (41), et dans lequel la ligne (60) pour transporter de la vapeur aussi bien que de l'air se termine directement, par le biais d'une restriction de vapeur (35), dans l'espace d'expansion (41).

9. Ensemble d'un dispositif pour préparer une boisson, comprenant un espace pouvant être fermé et ouvert de manière à recevoir et à contenir une quantité d'extrait de boisson, des moyens pour fournir un liquide à l'espace, et des moyens pour transporter une boisson à partir de l'espace vers une sortie du dispositif, et un dispositif (2) pour chauffer et faire mousser un liquide selon la revendication 1.
